**Europäisches Patentamt**

**European Patent Office**

(19)

**Office européen des brevets**

(11) Veröffentlichungsnummer: **0 012 318**
**B2**

(12) **NEUE EUROPÄISCHE PATENTSCHRIFT**

(45) Veröffentlichungstag der neuen Patentschrift:
16.07.86

(51) Int. Cl.⁴: **H 02 K 9/20**, H 02 K 9/19,
H 02 K 55/00

(21) Anmeldenummer: **79104853.1**

(22) Anmeldetag: **03.12.79**

(54) **Kühlsystem für Läufer elektrischer Maschinen, insb. für Turbogeneratoren-Läufer mit supraleitender Feldwicklung.**

(30) Priorität: **14.12.78 DE 2854059**

(43) Veröffentlichungstag der Anmeldung:
**25.06.80 Patentblatt 80/13**

(45) Bekanntmachung des Hinweises auf die Patenterteilung:
**06.04.83 Patentblatt 83/14**

(45) Bekanntmachung des Hinweises auf die Entscheidung über den Einspruch:
**16.07.86 Patentblatt 86/29**

(84) Benannte Vertragsstaaten:
**CH DE FR GB**

(73) Patentinhaber: **KRAFTWERK UNION AKTIENGESELLSCHAFT, Wiesenstrasse 35, D-4330 Mülheim (Ruhr) (DE)**

(72) Erfinder: **Intichar, Lutz, Dr., Max-Busch-Strasse 12, D-8520 Erlangen (DE)**
Erfinder: **Weghaupt, Erich, Rathenaustrasse 10, D-4330 Mülheim (Ruhr) (DE)**

(74) Vertreter: **Mehl, Ernst, Dipl.-Ing., Postfach 22 01 76, D-8000 München 22 (DE)**

(56) Entgegenhaltungen:
CH - A - 553 499
DE - A - 2 511 104
DE - B - 2 440 132

Bericht "EPRI TD-255, Project 672-1 Final Report, August 1976, S. 39-52 mit dem Titel "Superconductors in Large Synchronous Machines"
ASME Publication, 77 WA/HT-36, "The American Society of Mechanical Engineers", Winter Annual Meeting, Atlanta, Georgia, 27.11.-2.12.1977, Seiten 1-8
"A Helium Cooling System for Large Superconducting A.C. Generators" von P.W. Eckels und A.S. Ying, A Hofmann & C. Schnapper: "Heat transport with helium in rotation thermosiphor loops", Proc. 7th International

(56) Entgegenhaltungen: (Fortsetzung)
Cryogenic Engineering Conference, London 4-7 July 1978, Seite 378-385
A.Hofmann: "Thermally induced convection of helium in a rotating frame", Proc. 6th International Cryogenic Engineering Conference, Grenoble 11-14 May 1976, Seite 418-420

**Beschreibung**

Die Erfindung bezieht sich auf ein Kühlsystem für Läufer elektrischer Maschinen, insbesondere für Turbogeneratoren-Läufer, mit supraleitender Feldwicklung, wie es im Oberbegriff des Anspruchs 1 definiert ist.

Durch die DEB2-2 503 428, insbesondere Fig. 1, ist ein Turbogeneratoren-Läufer mit supraleitender Feldwicklung bekannt, bestehend aus einer Läufertrommel mit mindestens einem äusseren, im wesentlichen hohlzylindrischen Läuferkörper mit mitrotierendem Kälteschild und mit einem inneren, wärmeisolierend befestigten, als Wicklungsträger dienenden hohlen Läuferkörper, dessen Befestigungsstellen (Anlenkpunkte) am äusseren Läuferkörper gekühlt sind. Hierbei ist der den inneren Läuferkörper umgebende Raum evakuiert und mitels des Kälteschirmes gegen das Eindringen der Wärme von aussen geschützt. Über das Kühlsystem des Kälteschirmes und insbesondere der Erregerwicklung ist zu entnehmen, dass eine Dämpferwicklung über konzentrische Kanäle innerhalb der Welle und über Verbindungsschläuche mit Helium eingespeist und dass für die Erregerwicklung vorzugsweise eine Axialkühlung benutzt wird. Aber auch eine radiale Führung der an den Nutzwänden angeordneten Kühlnuten ist schon erwähnt.

Bei einem weiteren bekannten Kühlsystem aus dem Bericht «EPRI TD-255, Project 672-1, Final Report» August 1976, Seiten 39 bis 52 mit dem Titel «Superconductors in Large Synchronous Machines» ist eine am Innenumfang des inneren Läuferkörpers angeordnete mitrotierende Mischkammer vorgesehen, die ein Phasengemisch eines von aussen zugeführten Kühlmittels, insbesondere ein Helium-Phasengemisch, das sich bei Läuferrotation in Form eines äusseren, angeschleuderten Flüssigkeitsringes und einer konzentrischen inneren Dampfsäule ausbildet, enthält, wobei von der Mischkammer aus eine Entnahme eines ersten Kühlmittelstromes mit flüssigem Kühlmittel zur Kühlung der Feldwicklung und eines zweiten Kühlmittelstromes mit zumindest teilweise verdampftem Kühlmittel zur Kühlung einer rohrförmigen Wicklungsträgerbefestigung vorgesehen ist, und wobei eine Rückführung des durch die Feldwicklung geleiteten ersten Kühlmittelstromes in die Mischkammer und des zweiten Kühlmittelstromes aus der Maschine heraus erfolgt. Einzelheiten der Kühlmittelführung innerhalb des Wicklungsträgers und der Feldwicklung selbst zeigt diese Druckschrift nicht. Bei einer Anwendung dieses bekannten Kühlsystems gemäss der älteren deutschen Patentanmeldung P-2 742 477 erfolgt eine axiale Kühlung der Feldwicklungs-Leiter nach dem Zwangsumlaufprinzip, d.h., ds Kühlmittel tritt in die Kühlkanäle der Feldwicklungsleiter an der einen Stirnseite der Feldwicklung im Bereich der Querleiter ein, durchströmt diese und die axialen Leiterpartien und tritt im Querleiterbereich der anderen Stirnseite aufgewärmt wieder aus. Eine solche axiale Zwangsumlaufkühlung erfordert ein relativ hohes Druckgefälle zwischen Eintritts- und Austrittsseite der Feldwicklung und – wenn die Eigenförderwirkung des rotierenden Läufers nicht ausreicht – einen erhöhten Aufwand für den Kühlmittelanschlusskopf, d.h. insbesondere seine Abdichtung nach aussen, und die Kälteanlage, von der in der Regel flüssiges Helium geliefert wird. Ausserdem können eventuell entstehende Wicklungsheisspunkte nicht individuell gekühlt werden; man ist an den Kühlmitteldurchsatz des jeweiligen Längskanals gebunden.

Nun ist durch die ASME Publication, 77 WA/HT-36, «The American Society of Mechanical Engineers», Winter Annual Meeting, Atlanta, Georgia, 27.11. bis 2.12.1977, Seiten 1 bis 8 «A Helium Cooling System for Large Superconducting A.C. Generators» von P.W. Eckels und A.S. Ying ein gattungsgemässes Kühlsystem bereits bekannt, bei welcher die Kühlkanäle der supraleitenden Feldwicklung mit einem im Aussenumfangsbereich des Wicklungsträgers angeordneten Überflutungs-Verteilerkanalnetz kommunizieren. Dieses Verteilerkanalnetz wird durch über die axiale Länge des Wicklungsträgers verteilte radiale Einspeisekanäle, die im Polbereich des Wicklungsträgers angeordnet sind, mit überwiegend flüssigem Helium versorgt. Dabei ist das Verteilerkanalnetz von einem Doppelmantel umgeben: der erste, den Wicklungsträger mit Ringspalt umgebende Mantel ist ein sogenannter Divider, welcher über Durchlassschlitze bzw. Drosselstellen mit dem zweiten, auf grösserem Durchmesser liegenden, durch einen Kaltdämpferschild (Cryogenic Damper Shield) gebildeten Ringraum kommuniziert. Durch diesen zweiten Ringraum verläuft die Hauptströmung im Zwangsumlauf zu den beiden Stirnseiten des Wicklungsträgers, welche in der genannten Literaturstelle mit T (Torque tube thermosyphon – cooling loop that intercepts the torque tube cold end heat leak) bezeichnet sind. Was die Führung des Kühlmittels durch die radialen, an den Spulenseitenflächen der Wicklungsleiterpakete entlangführenden Kühlkanäle angeht, so ist bei dem bekannten System hierfür eine ganz willkürliche Thermosiphon-Schleifenströmung vorgesehen. Die Wicklung wird also durch die Überflutung mit flüssigem Helium und die sich willkürlich ausbildenden einzelnen Strömungsschleifen gekühlt; gezielt im Zuge der Zwangsumlaufströmung wird nur das in das äussere Überflutungs-Verteilerkanalnetz eingespeiste, überwiegend flüssige Helium radial nach aussen gebracht, welches sich im vorerwähnten zweiten Ringraum bei der Kaltdämpferkühlung erwärmt, wobei durch die radialen Rückspeisekanäle im Bereich T das erwärmte Phasengemisch ausserhalb des Wicklungsbereiches in das zentrale Bad aus flüssigem Helium zurückgeleitet wird. Dieser Zwangsumlauf hat nichts mit der eigentlichen Wicklungsleiterkühlung zu tun. Aufgrund der willkürlich sich einstellenden Thermosiphon-Schleifenströmung steht zur raschen Kühlung von Wärmenestern innerhalb der Wicklung verhältnismässig geringe Kühlleistung zur Verfügung.

Ausgehend von diesem bekannten Kühlsystem, welches wegen seines Überflutungs-Verteilerkanalnetzes bereits mit einem kleineren Druckgefälle zur Kühlung der supraleitenden Erregerwicklung im Vergleich zu einer axialen Zwangsumlaufkühlung auskommt, liegt der Erfindung die Aufgabe zugrunde, die Kühlströmung innerhalb der Kühlkanäle der supraleitenden Erregerwicklung selbst zu intensivieren derart, dass innerhalb des Läufers die Möglichkeit einer weitgehend individuellen Kühlung von Wicklungsleiterteilen bzw. darin eventuell entstehender Wärmenester gegeben sein soll. Mit anderen Worten: diese sollen so viel Kühlmittel abverlangen können, wie gerade erforderlich ist.

Ausgehend von einem Kühlsystem der im Oberbegriff des Anspruchs 1 definierten Art, wird die gestellte Aufgabe durch die im Kennzeichen des Anspruchs 1 angegebenen Merkmale gelöst.

Die mit der Erfindung erzielbaren Vorteile sind vor allem darin zu sehen, dass durch die örtlich entstehende bzw. eingestrahlte Wärme eine Vielzahl von Thermosiphon-Kühlschleifen des Kühlsystems angefacht wird, d.h., das in ihnen enthaltene flüssige Helium wird zu einer Zirkulationsströmung angefacht, wobei die Anfachung um so stärker ist, je grösser der örtlich vorhandene Wärmestau bzw. das örtlich vorhandene Wärmenest ist, und diese Vielzahl von Zirkulationsströmungen liegen alle, zueinander parallelgeschaltet, im Zwangsumlauf der Hauptströmung, welche vom Flüssigkeitsraum m1 der Mischkammer M ausgehend über die radialen, im Betrieb von der radial auswärts gerichteten Strömung flüssigen Kühlmittels beaufschlagten Einspeisekanäle, das Überflutungs-Verteilerkanalnetzt, die radialen Kühlkanäle der Feldwicklung und die Rückspeisekanäle letzterer in die Mischkammer M zurückverläuft. Dabei haben zur Anfachung einer intensiven Thermosiphon-Schleifenströmung die Wärmeisolierungen der radialen Einspeisekanäle und der radialen Rückspeisekanäle eine besondere Bedeutung, weil dadurch ein relativ grosser Überschuss in der radialen Länge der Kaltsäulen der jeweiligen Schleifenströmung über diejenige der Warmsäulen eintritt und damit die Strömungsrichtung der Thermosiphon-Schleifenströmung von vornherein vorgegeben ist. Dadurch, dass die Wicklungsleiterkühlung in den Hauptstrom einbezogen und keine Kühlmittelteilmenge von der dem Kaltdämpfer zuströmenden Kühlmittelmenge abgezweigt werden muss, stehen genügende Kühlmittelreserven für die Wicklungsleiterkühlung zur Verfügung, was im Zusammenwirken mit dem geringen Durchflusswiderstand des Kühlsystems von besonderem Vorteil ist.

Vorteilhafte Weiterbildungen der Erfindung sind in den abhängigen Ansprüchen beschrieben, wie nachfolgend anhand von zwei in der Zeichnung dargestellten Ausführungsbeispielen noch näher erläutert wird.

Bezüglich der Kühlzweige für die in den Feldwicklungsnuten liegenden Wicklungsleiterpakete finden dabei die Wicklungsleiter umgebende radiale Kühlkanäle sowie mit diesen in Verbindung stehende Nutengrundkanäle Verwendung, die für sich schon zum Stand der Technik gehören (CH-A 553 499, DE-A1 2 511 104 und DE-B2 2 440 132). In der Zeichnung zeigt:

Fig. 1 aufgeteilt auf Fig. 1A, 1B, vereinfacht und schematisch, unter Fortlassung der für das Verständnis der Erfindung nicht erforderlichen Teile, einen axialen Teilschnitt durch einen Turbogenerator-Läufer mit supraleitender Erregerwicklung, und zwar die untere Hälfte einen Polebenenschnitt, also längs der Linie la-la der Abwicklung nach Fig. 3, und die obere Hälfte der Fig. 1 einen Axialschnitt, dessen Lage durch die Schnittebene lb-lb aus Fig. 4 definiert ist;

Fig. 2 die Einzelheit II aus Fig. 1;

Fig. 3 eine Abwicklung des am Aussenumfang der Feldwicklung angeordneten Verteilerkanalnetzes mit angedeuteten Feldwicklungskonturen im Ausschnitt;

Fig. 4 einen Teilschnitt nach der Schnittlinie IV-IV aus Fig. 3;

Fig. 5 eine Nutkopfleiste perspektivisch im Ausschnitt;

Fig. 6 einen Teilschnitt nach der Schnittlinie VI-VI aus Fig. 3;

Fig. 7 ein zweites Auführungsbeispiel für das Verteilerkanalnetz und die Lage der Füllkanäle in entsprechender Darstellung zu Fig. 3 und

Fig. 8 einen Teilschnitt nach Schnittlinie VIII-VIII aus Fig. 7.

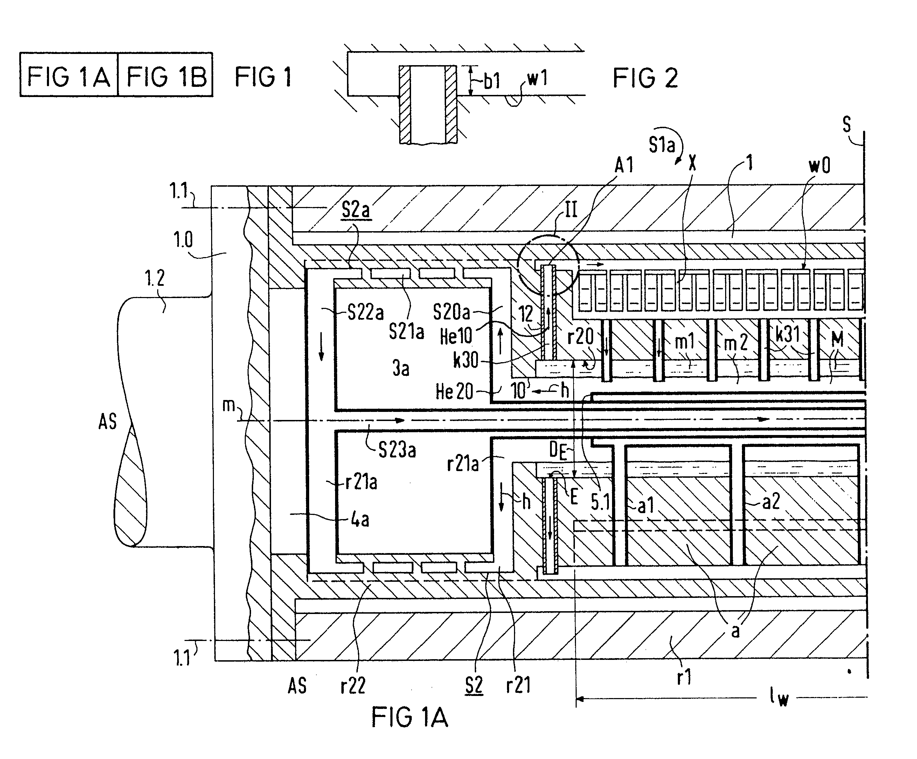

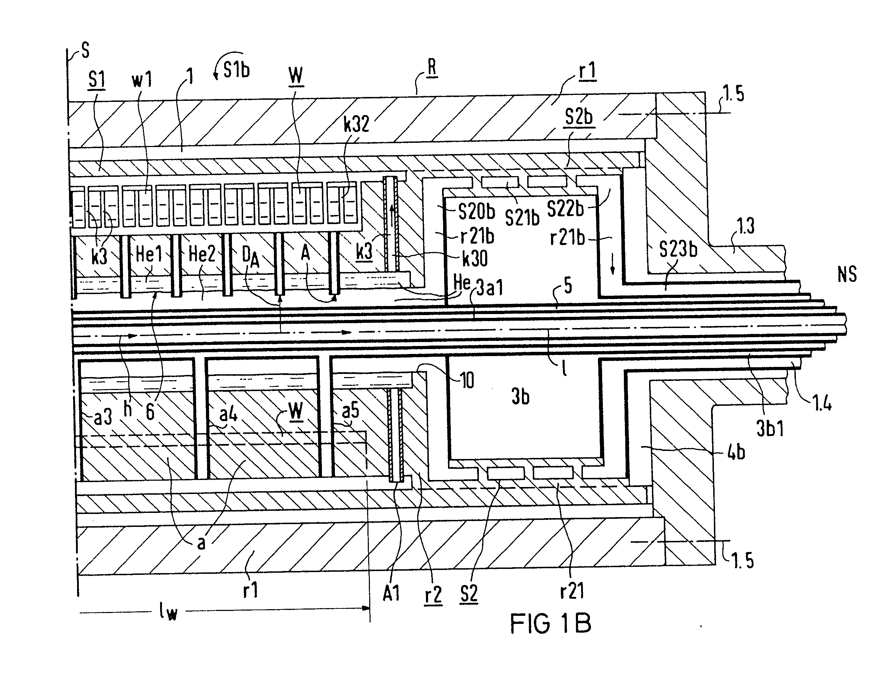

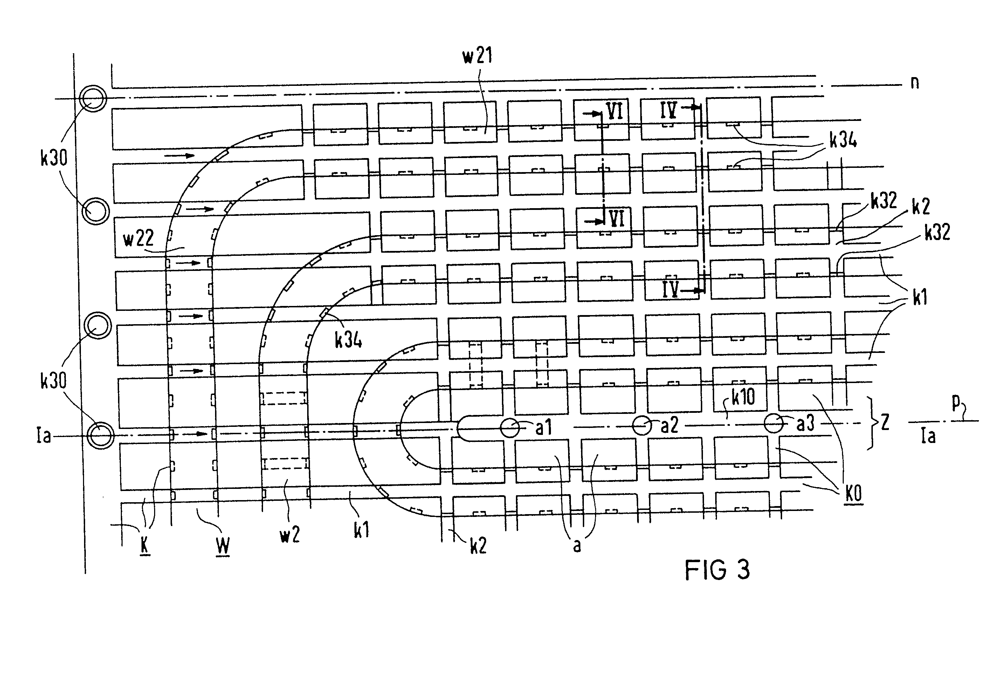

In Fig. 1 ist der Läufer R eines Turbogenerators mit supraleitender Feldwicklung W dargestellt. Form und Anordnung der Feldwicklung W sind in Fig. 1 lediglich angedeutet; sie gehen aus Fig. 3 deutlicher hervor. Der trommelförmige Läufer R besteht aus einem äusseren, im wesentlichen hohlzylindrischen Läuferkörper r1, zu dem auch ein (nicht näher dargestellter) äusserer Dämpfungszylinder gehören kann. Der Läufer R besteht ferner aus einem inneren wärmeisolierend befestigten, als Träger für die Wicklung W dienenden hohlen rohrförmigen Läuferkörper r2, welcher in das «Aussenrohr» des Läuferkörpers r1 hineingeschoben und mit einem Flansch 1.0 mittels Flanschschrauben 1.1 mit dem äusseren Läuferkörper r1 zusammengespannt ist. Ein am «Innenrohr» r2 angewachsener oder angeflanschter Wellenschaft ist mit 1.2 bezeichnet; er dient am linken Rotorende AS zur Ausbildung einer den Rotorteilen r1, 2 gemeinsamen Lagerstelle (nicht dargestellt), wogegen am rechten Wellenende NS konzentrisch zueinander je ein Wellenschaft 1.3, 1.4 für «Aussenrohr» r1 und «Innenrohr» r2 vorgesehen sind mit je einer Lagerstelle (nicht dargestellt), wie es z.B. in der CH-A 552 907 näher beschrieben ist. Zwischen den beiden Läuferkörpern r1, r2 ist ein Vakuum-Ringraum 1 angeordnet. 1.5 sind Flanschschrauben zwischen den Teilen 1.3 und r1.

Am Innenumfang r20 des inneren Läuferkörpers r2 ist eine mitrotierende Mischkammer M angeordnet, die ein Phasengemisch He des von aussen zugeführten flüssigen Tieftemperaturheliums enthält, wobei sich bei Läuferrotation ein äusserer gegen den Innenumfang r20 des inneren Läuferkörpers r2 angeschleuderter Flüssigkeitsring He1 und eine konzentrische innere Heliumdampfsäule He2 ausbildet. Von der Mischkammer M aus erfolgt nun die Entnahme eines ersten Kühlmittelstromes He10 mit flüssigem Kühlmittel zur Kühlung der Feldwicklung W und die Entnahme eines zweiten Kühlmittelstromes He20 mit zumindest teilweise verdampftem Helium zur Versorgung der Kühlspiralen r21 an den beiden Enden des Wicklungsträgers bzw. inneren Läuferteiles r2. Die Kühlspiralen r21a und r21b umgeben jeweils Vakuumräume 3a und 3b des inneren Läuferkörpers r2. Im einzelnen wird der zweite Kühlmittelstrom He20 durch die Kühlmittelschleife S2a auf der Antriebsseite AS und die Kühlmittelschleife S2b auf der Nichtantriebsseite NS geführt. Die Kühlmittelschleife S2a besteht aus den radial verlaufenden Zuströmästen S20a, den Spiralteilen S21a, den radial verlaufenden Rückströmästen S22a und dem zentralen, den Vakuumraum 3a auf einem Teil seiner Länge axial durchdringenden Rückströmkanal S23a. Die vom zweiten Kühlmittelstrom He20 beaufschlagte Kühlmittelschleife S2b auf der Nichtantriebsseite NS besteht sinngemäss aus den radialen Zuströmästen S20b, den Spiralteilen S21b, den radialen Rückströmästen S22b und dem koaxial zu dem zentralen Rückströmkanal S23a verlaufenden Wellenkanal S23b.

Der zweite Kühlmittelstrom He20 wird also in Form zweier gegenläufig und parallel zueinander durchflossenen Schleifen S2a und S2b durchströmt, die als Ganzes als Aussenschleifen S2 bezeichnet werden und der Kühlung der Wicklungsträgerbefestigung 1.0, 1.1 bzw. 1.3, 1.5 dienen. Zur axialen Abschirmung der beiden Aussenschleifen S2a und S2b nach aussen sind diesen axial jeweils vorgelagert weitere Vakuumräume 4a und 4b. Die vom ersten Kühlmittelstrom He10 eingespeiste, zur Kühlung der Feldwicklung W dienende innere Kühlschleife ist als Ganzes mit S1 bezeichnet. 3a1 ist ein den zentralen Rückströmkanal S23a koaxial umgebender Vakuumkanal des Vakuumraumes 3a, der den Kanalraum S23a mit aufgewärmtem Helium abschirmt von einem wiederum koaxial zum Kanalraum 3a1 angeordneten Zuströmkanal 5 für frisches rückgekühltes Helium, welches in den Zuströmkanal 5 über die Eintrittskammer eines (nicht dargestellten) Heliumanschlusskopfes und zu diesem von einer Kältemaschine gelangt. Parallel zum Rückströmkanal S23a der Aussenschleife S2a wird das innerhalb der Aussenschleife S2b im Kälteschild aufgewärmte Helium über den koaxialen Wellenkanal S23b zur Austrittskammer des Helium-Anschlusskopfes zwecks Austritts aus der Maschine gefördert, von welcher das Helium abgepumpt und in das Kälteaggregat zurückgeführt wird. Der Heliumanschlusskopf des Rotors R ist einfachheitshalber nicht dargestellt, da zum Verständnis der Erfindung nicht erforderlich. Die Strömungsrichtung des Heliums innerhalb der zugehörigen Kanäle des Rotors R ist generell mit den Pfeilen h angedeutet, gleichgültig, ob es sich in der flüssigen oder der gasförmigen Phase befindet. Der koaxiale, mit dem Vakuumraum 3b verbundene Vakuumraum 3b1 schirmt den Zuströmkanal 5 flüssigen Heliums ab gegenüber dem Wellenkanal S23b für das aus der Schleife S2b kommende aufgewärmte überwiegend gasförmige Helium, wobei wiederum der Wellenkanal S23b nach aussen durch den Vakuumraum 4b abgeschirmt ist.

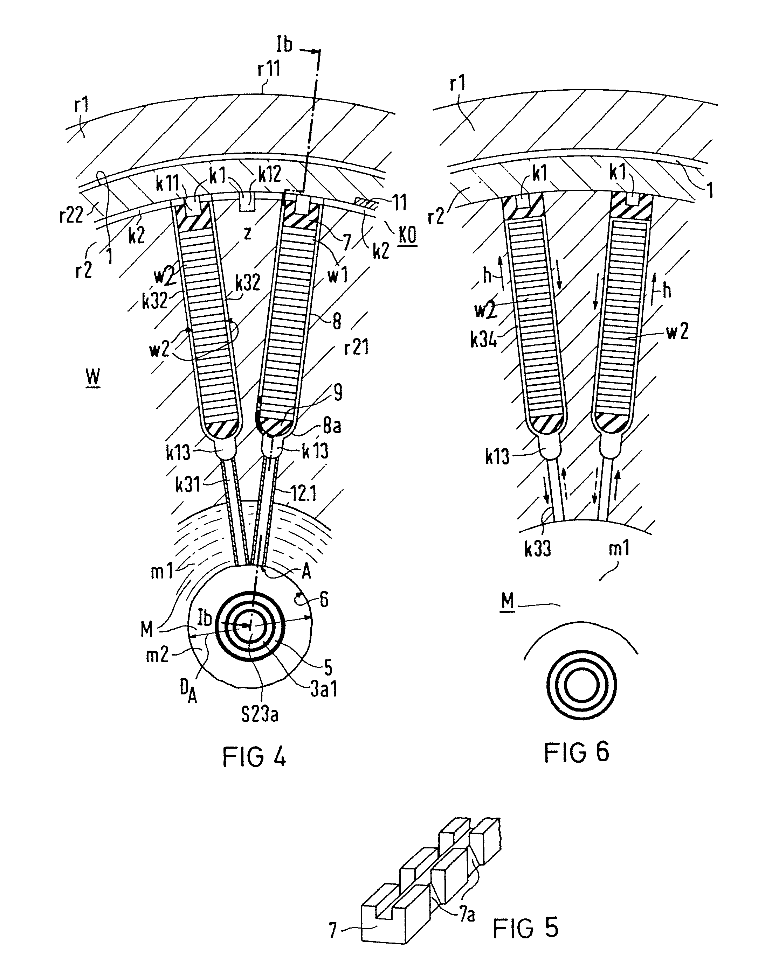

Wie es Figuren 1 und 3 zeigen, sind Wicklungsträger r2 und Feldwicklung W von einem Netz von Kühlmittelkanälen K durchzogen, und zwar axialen k1, tangentialen k2 und radialen Kühlmittelkanälen k3. Hierzu ist am Aussenumfang w0 bzw. ausserhalb der radial äussersten Spulenbasis w1 der Feldwicklung W ein Verteilerkanalnetz KO vorgesehen, bestehend aus den schon erwähnten, im wesentlichen axial verlaufenden Verteilerkanälen k1 und den im wesentlichen tangential verlaufenden Verteilerkanälen k2 (Fig. 3). Mit diesem Verteilerkanalnetz KO kommunizieren im wesentlichen radiale, an Spulenseitenflächen der Wicklungsleiterpakete w2 entlangführende Kühlkanäle k32 (siehe insbesondere Fig. 4). Das Verteilerkanalnetz KO steht nun ausserhalb des Axialbereiches $1_w$ der Feldwicklung W auf der Antriebsseite AS und auf der Nichtantriebsseite NS mittels radialer Einspeisekanäle k30 mit dem Flüssigkeitsraum m1 der Mischkammer M in Verbindung, wobei ein Mündungsbereich der Einspeisekanäle k30 in Fig. 2 vergrössert dargestellt ist mit dem Abstand b1 zur radial äussersten Spulenbasis w1. Die radialen Kühlkanäle k32 der Feldwicklung W ihrerseits münden über Rückspeisekanäle k31 in die Mischkammer M an solchen Austrittsstellen A, die auf einem kleineren Durchmesser $D_A$ liegen als die Eintrittsstellen E der Einspeisekanäle k30, deren zugehöriger Durchmesser mit $D_E$ bezeichnet ist. Die Mündungsstellen A der Rückspeisekanäle k31 liegen vorzugsweise innerhalb des Dampfraumes m2, wobei der Spiegel des Flüssigkeitsringes He1 in Fig. 1 und 4 mit 6 bezeichnet ist, an welchem im Betrieb des Läufers bzw. Rotors R fortlaufend ein Ausdampfen von Helium erfolgt. Für die angestrebte Thermosiphon-Schleifenströmung ist es besonders günstig, die Austrittsstellen A nicht nur auf einem Durchmesser $D_A < D_E$ zu legen, sondern genügend weit in den Flüssigkeitsraum m1 hineinragen bzw. sogar bis zum Flüssigkeitsraum m1 hineinragen bzw. sogar bis zum Flüssigkeitsspiegel 6 sich erstrecken zu lassen, wie es Fig. 1 und 4 zeigen. Weiterhin ist es für die weiter unten noch näher erläuterte Anfachung der Thermosiphon-Schleifenströmung günstig, wenn die radialen Einspeisekanäle k30 des Verteilerkanalnetzes KO zur Abschirmung von relativ wärmeren anliegenden Läuferballenpartien über ihre Länge wärmeisoliert sind, insbesondere als Doppelmantel-Hochvakuumrohre ausgebildet sind. Der gleiche Effekt wird erzielt, wenn man, vgl. Fig. 4, die radialen Rückspeisekanäle k31 über ihre Länge wärmeisoliert und als Doppelmantel-Hochvakuumrohre ausbildet, um sie so vor relativ kälteren anliegenden Läuferballenpartien zu isolieren. Am günstigsten ist es, wenn die vorerwähnten Isoliermassnahmen sowohl für die radialen Einspeisekanäle k30 als auch die radialen Rückspeisekanäle k31 getroffen werden.

Zur Füllung bzw. Nachfüllung des Verteilerkanalnetzes KO, der radialen Kühlkanäle k32, der Rückspeisekanäle k31, der Einspeisekanäle k30 sowie der Mischkammer M mit Kühlmittel sind die radial verlaufenden Füllkanäle a1, a2...a5 vorgesehen, die von einem innerhalb der Mischkammer M liegenden mitrotierenden koaxialen Füllrohr 5 ausgehend zum Verteilerkanalnetz KO, und zwar zu einem erweiterten Axialkanal k10 (Fig. 3), geführt sind. Wie es Fig. 3 zeigt, sind die radialen Füllkanäle a1, a2, allgemein mit a bezeichnet, im Zahnbereich z des Wicklungsträgers r2 angeordnet. Insbesondere sind die radialen Füllkanäle a im Polbereich (Polachse p) über die axiale Länge $1_w$ des Wicklungsträgers verteilt angeordnet und mit ihnen der erweiterte Axialkanal k10, der mit den übrigen axialen Verteilerkanälen k1 des Verteilerkanalnetzes KO über die tangentialen Verteilerkanäle k2 in Verbindung steht. Die Füllkanäle a haben die Aufgabe, das System der Kühlkanäle K über das Verteilerkanalnetz KO zunächst einmal mit Kühlmittel aufzufüllen, wobei dann im gefüllten Zustand für die links und die rechts der achsnormalen Symmetrieachse s gelegenen Kühlkanalschleifen sich die Strömungsrichtung nach Anfachung der Thermosiphon-Schleifenströmung gemäss den Pfeilen S1a und S1b ergibt, wie es auch aus der Richtung der kleinen Strömungspfeile h ablesbar ist. Während des Betriebes wird über die Füllkanäle a nur so viel flüssiges Helium nachgespeist, wie es innerhalb der Aussenschleifen S2 als weitgehend dampfförmiges Helium verbraucht wird. Für die gewünschte Thermosiphon-Schleifenströmung ist es ferner wesentlich, dass die radialen Einspeisekanäle k30 mit ihren Austrittsöffnungen A1 radial weiter aussen liegen, als die radial äusserste Spulenbasis w1 der Feldwicklung W, so dass also das Verteilerkanalnetz KO während des Betriebes mit flüssigem Helium überflutet wird.

Mit Bezug auf Fig. 3 bis 6 wird nun das Kühlkanalsystem der Wicklung W erläutert. Wie erwähnt, werden alle Kühlkanäle K, also auch das Verteilerkanalnetz KO, über die radialen Füllkanäle a, d.h. a1, a2 usw., mit flüssigem Helium bei Betriebsbeginn aufgefüllt bzw. überflutet. Es verteilt sich vom erweiterten Axialkanal k10 über die tangentialen Kanäle k2, welche jeweils die axialen Kanäle k1 anschneiden, so dass das gesamte Netz KO mit Helium überflutet wird, d.h., es werden auch die radialen Kühlkanäle k32 (vgl. Fig. 4), die unterhalb der Wicklungsleiterpakete w2 liegenden, axial verlaufenden Nutengrundkanäle k13, die mit letzteren kommunizierenden radialen Rückspeisekanäle k31 sowie über die Nutengrundkanäle k13 und über radiale Stichkanäle k33 (siehe Fig. 6) eine zweite Gruppe von radialen Kühlkanäle k34 gefüllt. Während sich also über die ersten radialen Kühlkanäle k32 während des Betriebes eine Thermosiphon-Schleifenströmung (vgl. Pfeile S1a, S1b aus Fig. 1 sowie Fig. 3) ausbilden kann, da es sich um über die Mischkammer M geschlossene Schleifen handelt, kann sich über die zweiten radialen Kühlkanäle k34 gemäss Fig. 6 und 3 nur eine örtliche Thermosiphon-Schleifenströmung ausbilden, welche in ihrer Richtung von vornherein nicht vorgegeben ist und z.B. im Uhrzeigersinn (linkes Spulenleiterpaket w2 der Fig. 6) oder im Gegenzeigersinn (rechtes Spulenleiterpaket der Fig. 6) erfolgen kann. Verdampftes Helium bzw. spezifisch leichteres Helium wird hierbei durch die radialen Stichkanäle k33 in die Mischkammer M befördert, wogegen reativ kälteres Helium von der Mischkammer M über die Stichkanäle k33 bzw. von den Nutengrundkanälen k13 in die zweiten radialen Kühlkanäle k34 gelangt.

Aus Fig. 3 ist ersichtlich, dass die ersten (durchgehenden) radialen Kühlkanäle k32 über die tangentialen Kanalteile k2 jeweils von den benachbarten Axialkanälen k1 versorgt werden, wogegen abwechselnd mit k32 jeweils in axialen Zwischenräumen zwischen den Tangentialkanälen k2 die zweiten radialen Kühlkanäle k34 angeordnet sind zur örtlichen Kühlung.

Fig. 4 zeigt, dass der radiale Abstand zwischen der Feldwicklung W, d.h. der radial äussersten Spulenbasis w1, und dem Verteilerkanalnetz KO durch Nutkopfleisten 7 gebildet ist, welche im radial oberen Bereich der die Spulenleiterpakete w2 aufnehmenden Nuten 8 angeordnet sind. Zur Festlegung der Spulenseiten bzw. Spulenleiterpakete w2 innerhalb ihrer Nuten 8 sind ausserdem im Bereich des Nutengrundes 8a Nutengrundeinlagen 9 vorgesehen, die ebenso wie die Nutkopfleisten 7 aus einem formstabilen hochwertigen Isoliermaterial bestehen. Zur Bildung der radialen Kühlkanäle k32 und k34 sind zwischen den Spulenleiterpaketen w2 und den Wandungen der Nut 8 nicht näher dargestellte Abstandshalter eingefügt. In den Aussenumfang des inneren Läuferteiles r2 sind die axialen Kanäle k1, k10 und die tangentialen Kanäle k2 eingeschnitten (z.B. mittels Fräsen). Zur Bereitstellung eines ausreichenden Kanalquerschnitts der axialen Kanäle k1 sind auch in die Nutkopfleisten 7 entsprechende Axialkanäle k11 und in den äussren Zahnbereich Axialkanäle k12 eingeschnitten (Fig. 4). Alle Axialkanäle k1, k11, k12 sind so reichlich bemessen, dass der in ihnen entstehende Druckabfall des Kühlmediums über die Rotorlänge gesehen vernachlässigbar klein ist, wodurch eine für die Thermosiphon-Schleifenströmung wichtige Bedingung erfüllt ist.

Damit von den Axialkanälen k1, k11 im Bereich der Nutkopfleisten 7 die strömungsmässige Verbindung zu den ersten radialen Kühlkanälen k32 gegeben ist, sind so, wie in Fig. 5 perspektivisch angedeutet, die Nutkopfleisten 7 mit seitlichen Einfräsungen 7a versehen, und zwar auf beiden Seiten und über die axiale Länge verteilt. Fig. 3 zeigt, dass die Wicklung W mit ihren einzelnen Spulenleiterpaketen w2 durch eine Vielzahl von über ihre Länge und ihren Umfang verteilten ersten,radialen Kühlkanälen k32 und zweiten radialen Kühlkanälen k34 kühlungsmässig erschlossen ist.

Die in Fig. 1 gezeigte Mischkammer M kann auch etwa von der mittleren Symmetrieachse s des Rotorballens ausgehend nach aussen in Richtung auf die Anschlussstellen der radialen Einspeisekanäle k30 etwas konisch erweitert sein.

Auch hierdurch kann die Thermosiphon-Schleifenströmung begünstigt werden, da sich die relativ kälteren Heliumanteile aufgrund ihres höheren spezifischen Gewichtes und der deswegen auf sie wirkenden grösseren Fliehkräfte möglichst weit radial nach aussen anlagern. Eine solche (konische) Ausbildung der Mischkammer ist z.B. in der älteren deutschen Patent-Anmeldung P 2 742 477.7 näher behandelt. Der Flüssigkeitsspiegel 6 bleibt im Betriebszustand konstant, da überschüssiges flüssiges Helium über die Überlaufkanten 10, welche auf dem gleichen Radius liegen wie der Flüssigkeitsspiegel 6, in die äusseren Heliumschleifen S2a und S2b zusammen mit dem gasförmigen Helium He20 strömen. Fig. 4 zeigt noch einen Innendämpferzylinder 11 im Ausschnitt, der am Innenumfang eines Stahlzylinders r22 angeordnet ist. Dieser vorzugsweise aus Kupfer bestehende Innendämpfer erfüllt ausser seiner Funktion der Abschirmung von äusseren Wechselfeldern auch die Aufgabe, von aussen über den Vakuumringraum 1 einfliessende Wärmemengen möglichst gleichmässig über den gesamten Aussenumfang der Wicklung W zu verteilen, so dass eine möglichst hohe Anzahl von Thermosiphon-Schleifen in ihrer Heliumströmung angefacht werden.

Aus Fig. 3 ist ersichtlich, dass die Wicklung W sowohl im Bereich ihrer Querleiter w22 als auch im Bereich ihrer Längsleiter w21 durch beide Arten von radialen Kühlkanälen k32 und k34 kühlungsmässig erschlossen ist. Die elektrischen Zu- und Ableitungen der Feldwicklung W sind nicht dargestellt; für sie wäre ein entsprechendes Kühlsystem, das an das Verteilerkanalnetz KO angeschlossen ist, vorzusehen. Die Wirkungsweise des Kühlsystems nach Fig. 1 bis 6 ergibt sich damit wie folgt:

Das Füllen aller Kühlkanäle K mit Helium erfolgt (im unerregten Zustand der Wicklung W) z.B. bei Turndrehzahl, wobei der Läufer langsam auf Betriebsdrehzahl hochgefahren wird und das flüssige Helium über den koaxial zur Läufer-Rotationsachse 1 angeordneten Einspeisekanal 5 zugeführt wird. An seinem Ende ist der Kanalraum 5 durch eine Querwand 5.1 geschlossen; das flüssige Helium wird deshalb über die radialen Füllkanäle a (siehe Fig. 1, Fig. 3) in das äussere Verteilerkanalnetz KO aufgrund der Rotorpumpwirkung eingespeist. Es füllen sich dann radial von aussen nach innen fortschreitend alle Radialkanäle k32, k31, k30, k33 sowie auch die Nutengrundkanäle k13 und von diesen ausgehend auch die zweiten Radialkanäle k34, wobei sich dann der angeschleuderte Flüssigkeitsring He1 ausbildet und in dem Masse, wie durch die äusseren Kühlschleifen S2 gasförmiges Helium He20 abgezogen wird, entsprechend am Flüssigkeitsspiegel 6 Helium verdampft und so zu einer Abkühlung im Oberflächenbereich des angeschleuderten Flüssigkeitsringes m1 führt. Es kann in diesem Zustand bereits zur Anfachung einer Thermosiphon-Schleifenströmung kommen, dadurch, dass sich relativ kältere Heliumpartikel im Bereich der Eintrittsöffnungen E der radialen Einspeisekanäle k30 ansammeln, so dass die Flüssigkeitssäulen in den Einspeiserohren k30 spezifisch schwerer sind als in den übrigen radialen Kühlkanälen, womit sich ein Druckgefälle in Richtung der Innenschleife S1a für die linke Maschinenhälfte ergibt. Dieser Effekt wird durch die Hochvakuumisolierung 12 der radialen Einspeisekanäle k30 unterstützt, ebenso wie durch die Hochvakuumisolierung 12.1 der Rückspeisekanäle k31 (Fig. 4). Die Thermosiphon-Schleifenströmung ist jedoch, sofern innerhalb der bzw. in die Wicklung W keine Verlustwärme entsteht oder eingeleitet bzw. eingestrahlt wird, noch schwach bzw. noch nicht vorhanden. Sie ist zur Kühlung ja dann auch nicht erforderlich. Richtig angefacht wird sie erst, wenn z.B. an der Stelle X (Fig. 1) ein Wärmenest oder ein Heisspunkt entsteht. Dann ergibt sich eine merkliche Differenz der spezifischen Gewichte der Heliumsäulen in den radialen Einspeisekanälen k30 einerseits und den betreffenden radialen Kühlkanälen k32, k31 anderseits und dementsprechend eine die Thermosiphon-Schleifenströmung anfachende Druckdifferenz, die um so grösser ist, je grösser die örtlich entstehende und abzuführende Verlustwärme ist. In der Praxis wird sich über die gesamte Wicklung W verteilt eine Einstrahlung und Einleitung von Verlustwärme ergeben, und es werden auch örtlich, insbesondere an den nicht dargestellten Kontaktverbindungen der Spulenwindungen und im Bereich der Erregerleiteranschlussstellen (nicht dargestellt), sich wärmere Zonen ergeben, so dass während des Betriebes das gesamte Kühlsystem von einer kontinuierlichen Thermosiphon-Schleifenströmung durchflossen ist und so eine effektive eigensichere Kühlung erzielt wird.

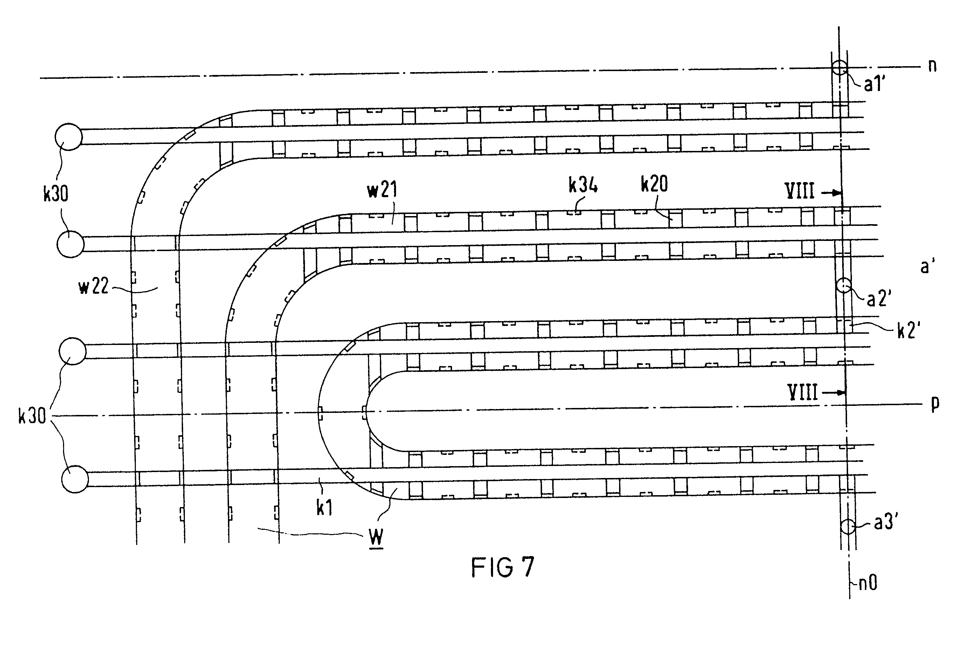

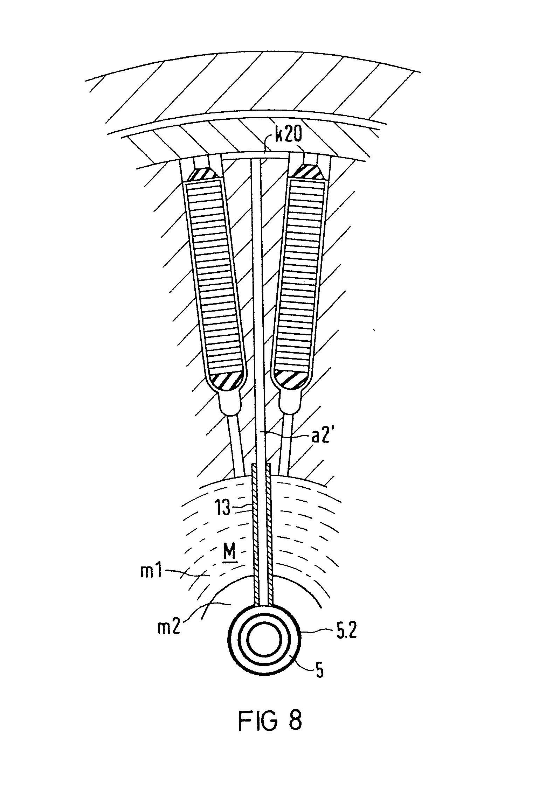

Eine sinngemässe Wirkungsweise ergibt sich für die Kühlsystem-Variante nach den Fig. 7 und 8, die sich vom ersten Ausführungsbeispiel nach Fig. 1 bis 6 dadurch unterscheidet, dass die radialen Füllkanäle a' innerhalb einer achsnormalen Fluchtebene n0, die vorzugsweise in Ballenmitte liegt, über den Umfang des Wicklungsträgers r2 verteilt angeordnet sind (siehe radiale Füllkanäle a1', a2', a3'). Zu ihrem Anschluss an das Verteilerkanalnetz KO dienen Umfangskanalstücke k2', welche in die axialen Verteilerkanäle k1 des Verteilerkanalnetzes KO münden. Die die einzelnen radialen Kühlkanäle k32 erschliessenden tangentialen Verteilerkanäle sind in Fig. 5 mit k20 bezeichnet. Die Polachse ist mit p, die Neutrale mit n bezeichnet. Fig. 8 zeigt einen einzelnen radialen Füllkanal a2', wobei zwischen dem Kanalraum 5 des Einspeiserohres 5.2 und dem Innenumfang des Wicklungsträgers r2 jeweils über den Umfang verteilte Verbindungsrohrstücke 13 angeordnet sind, welche das flüssige, vom Kühlmit-

telanschlusskopf kommende Helium beim Füll- vorgang dem äusseren Verteilerkanalnetz KO zuführen und die Mischkammer M, d.h. ihren Flüssigkeitsring m1 und ihren Dampfraum m2, durchdringen. Im übrigen ist die Ausbildung dieses Kühlsystems so wie die beim ersten Ausführungsbeispiel.

**Patentansprüche**

1. Kühlsystem für Läufer elektrischer Maschinen, insbesondere für Turbogeneratoren-Läufer, mit supraleitender Feldwicklung, bestehend aus einer Läufertrommel mit mindestens einem äusseren, im wesentlichen hohlzylindrischen Läuferkörper (r1) mit mitrotierendem Kälteschild, mit einem inneren, wärmeisolierend befestigten, als Wicklungsträger (r2) dienenden, hohlen Läuferkörper, dessen Befestigungsstellen (Anlenkpunkte) am äusseren Läuferkörper (r1) gekühlt sind, ferner mit einer am Innenumfang des inneren Läuferkörpers (r2) angeordneten, mitrotierenden Mischkammer (M), die ein Phasengemisch eines von aussen zugeführten Kühlmittels enthält, insbesondere ein Helium-Phasengemisch (He1, He2), das sich bei Läuferrotation in Form eines äusseren, angeschleuderten Flüssigkeitsringes (He1) und einer konzentrischen, inneren Dampfsäule (He2) ausbildet, wobei von der Mischkammer (M) aus eine Entnahme eines ersten Kühlmittelstromes (He10) mit flüssigem Kühlmittel zur Kühlung der Feldwicklung (W) und eines zweiten Kühlmittelstromes (He20) mit zumindest teilweise verdampftem Kühlmittel zur Kühlung einer rohrförmigen Wicklungsträgerbefestigung an zumindest einem Axialende des Wicklungsträgers (r2) vorgesehen ist, und wobei eine Rückführung des durch die Feldwicklung (W) geleiteten ersten Kühlmittelstromes (He10) in die Mischkammer (M) und des zweiten Kühlmittelstromes (He20) aus der Maschine heraus erfolgt, wobei ferner Wicklungsträger (r2) und Feldwicklung (W) von einem Netz axialer, tangentialer und radialer Kühlmittelkanäle (K) durchzogen sind, zu welchem Zweck mit einem am Aussenumfang (wo) ausserhalb der radial äussersten Spulenbasis (w1) der Feldwicklung (W) angeordneten Verteilerkanalnetz (KO), bestehend aus axial und tangential verlaufenden Verteilerkanälen (k1, k2), radiale, an Spulenseitenflächen der Wicklungsleiterpakete (w2) entlangführende Kühlkanäle (k32) kommunizieren, welch letztere über Nutengrundkanäle (k13) und Rückspeisekanäle (k31) mit dem Flüssigkeitsraum (m1) der Mischkammer (M) in Verbindung stehen, dadurch gekennzeichnet,

a) dass das Verteilerkanalnetz (KO) ausserhalb des Axialbereiches (1w) der Feldwicklung auf der Antriebsseite (AS) und der Nichtantriebsseite (NS) mittels radialer, im Betrieb von einer radial auswärts gerichteten Strömung flüssigen Kühlmittels beaufschlagter Einspeisekanäle (k30) mit dem Flüssigkeitsraum (m1) der Mischkammer (M) in Verbindung steht,

b) dass die radialen Kühlkanäle (k32) der Feldwicklung (W) über die Rückspeisekanäle (k31) in die Mischkammer (M) an Stellen (A) münden, die höchstens auf gleichem und vorzugsweise auf kleinerem Durchmesser (DA) liegen als die Mischkammer-Eintrittsstellen (E) der Einspeisekanäle (k30),

c) dass die radialen Einspeisekanäle (k30) des Verteilerkanalnetzes (KO) zur Abschirmung von relativ wärmeren anliegenden Läuferballenpartien und die radialen Rückspeisekanäle (k31) zur Abschirmung von relativ kälteren anliegenden Läuferballenpartien über ihre Länge wärmeiso- liert, insbesondere als Doppelmantel-Hochvaku- umrohre (12, 12.1), ausgebildet sind,

d) so dass die radialen Kühlkanäle (k32) einerseits mit dem Verteilerkanalnetz (KO) und andererseits über die Nutengrundkanäle (k13) und die Rückspeisekanäle (k31) mit der Mischkammer (M) sowie letztere wiederum mit den radialen Einspeisekanälen (k30) im Zuge durchgehender Thermosiphon-Kühlschleifen (S1a, S1b) in Verbindung stehen bzw. steht und diese Thermosiphon-Kühlschleifen von den Flüssigkeitssäulen in den radialen Einspeisekanälen (k30) angetrieben werden, welche Flüssigkeitssäulen spezifisch schwerer weil kälter sind als die Flüssigkeitssäulen in den übrigen radialen Kühlkanälen der Thermosiphon-Kühlschleifen (S1a, S1b).

2. Kühlsystem nach Anspruch 1, dadurch gekennzeichnet, dass zur Füllung bzw. Nachfüllung der Kühlmittelkanäle (K) und der Mischkammer (M) mit Kühlmittel radial verlaufende Füllkanäle (a1, a2...a5, a1'...a3') vorgesehen sind, die von einem innerhalb der Mischkammer (M) liegenden mitrotierenden koaxialen Füllrohr (5), das an eine Heliumkupplung angeschlossen ist, zum Verteilerkanalnetz (KO) geführt sind.

3. Kühlsystem nach Anspruch 2, dadurch gekennzeichnet, dass die radialen Füllkanäle (a1...a5, a1'...a3') im Zahnbereich (Z) des Wicklungsträgers (r2) angeordnet sind.

4. Kühlsystem nach Anspruch 3, dadurch gekennzeichnet, dass die radialen Füllkanäle (a1...a5) in einer axialen Flucht (p), vorzugsweise im Polbereich, über die axiale Länge (1w) des Wicklungsträgers (r2) verteilt angeordnet sind und zu ihrem Anschluss an das Verteilerkanalnetz (KO) ein erweiterter Axialkanal (k10) desselben vorgesehen ist, der mit den übrigen axialen Verteilerkanälen (k1) des Verteilerkanalnetzes über tangentiale Verteilerkanäle (k2) in Verbindung steht.

5. Kühlsystem nach Anspruch 3, dadurch gekennzeichnet, dass die radialen Füllkanäle (a1'...a3') in einer achsnormalen Fluchtebene (no), vorzugsweise in Ballenmitte (S), über den Umfang des Wicklungsträgers (r2) verteilt angeordnet sind und zu ihrem Anschluss an das Verteilerkanalnetz (KO) Umfangskanalstücke (k2') vorgesehen sind, welche in die axialen Ver- teilerkanäle (k1) des Verteilerkanalnetzes mün- den.

6. Kühlsystem nach einem der Ansprüche 1 bis 5, dadurch gekennzeichnet, dass radiale Rohre für die Rückspeisekanäle (k31) durch den angeschleuderten Flüssigkeitsring (m1) der Mischkammer (M) hindurchragend in den Raum (m2) der konzentrischen inneren Dampfsäule (He2) mündend angeordnet sind.

## Claims

1. A cooling system for electric machine rotors, in particular for turbo generator rotors, with a superconductive field winding consisting of a rotor drum having at least one outer rotor body (r1), essentially hollow-cylindrical, with a co-rotating cold shield, an internal hollow rotor body secured in a heat-insulating manner to serve as a winding carrier (r2) whose fastening points (articulated points) on the outer rotor body (r1) are cooled, further having a co-rotating mixing chamber (M) arranged on the inner periphery of the inner rotor body (r2) comprising a phase mixture of a coolant supplied from the outside, in particular of a helium phase mixture (He1, He2) which adopts the shape of an outer, centrifuged liquid ring (He1) during rotor rotation and a concentric inner vapour column (He2), where an extraction of a first coolant current (He10) with liquid coolant for cooling the field winding (W) and of a second coolant current (He20) with at least partially evaporated coolant for cooling a tubular winding carrier fastening means at least one axial end of the winding carrier (r2) is carried out from the mixing chamber (M), and where the first coolant current (He10) passed through the field winding (W) is returned into the mixing chamber (M) and the second coolant current (He20) is returned from the machine, where furthermore the winding carrier (r2) and field winding (W) are traversed by a network of axial, tangential and radial coolant channels (K), for which purpose radial cooling channels (k32) guided on the lateral coil surfaces of the conducting winding parcels (w2) communicate with a distributor channel network (KO) of axial and tangential distributor channels (k1, k2) arranged on the outer periphery (wo) outside the radial outer coil base (w1), which cooling channels (k32) are connected to the liquid space (m1) of the mixing chamber (M) by grooved base channels (k13) and return channels (k31), characterised in:

a) that outside the axial region (1w) of the field winding on the driving side (AS) and the non-driving side (NS) the distributor channel network (KO) is connected to the liquid space (m1) of the mixing chamber (M) by radial feeding channels (k30) which are acted upon by a current of liquid coolant directed radially outwards during operation;

b) that the radial cooling channels (k32) of the field winding (W) open into the mixing chamber (M) via the return channels (k31) at points (A) which at most lie on the same diameter, and preferably on a smaller diameter (DA), than the mixing chamber inlet points (E) of the feeding channels (k30);

c) that the radial feeding channels (k30) of the distributor channel network (KO) in order to screen relatively warmer adjoining rotor body sections and the radial return channels (k31) are heat-insulated across their length in order to screen relatively colder adjoining rotor body sections and are in particular designed as double casing high vacuum pipes (12, 12.1); and

d) so that the radial cooling channels (k32) are connected to the distributor channel network (KO) and to the mixing chamber (M) via the grooved base channels (k13) and the return channels (k31), said mixing chamber is connected to the radial feeding channels (k30) in the course of continuous thermosiphon cooling loops (S1a, S1b) and said thermosiphon cooling loop are driven by the liquid columns in the radial feeding channels (k30), which liquid columns are specifically heavier and hence colder than the liquid columns in the remaining radial cooling channels of the thermosiphon cooling loops (S1a, S1b).

2. A cooling system as claimed in Claim 1, characterised in that in order to fill or re-fill the coolant channels (K) and the mixing chamber (M) with coolant there are arranged radially extending filling channels (a1, a2...a5, a1'...a3'), led to the distributor channel network (KO) by a co-rotating coaxial filling pipe (5) arranged within the mixing chamber (M) and connected to a helium coupling.

3. A cooling system as claimed in Claim 2, characterised in that the radial filling channels (a1...a5, a1'...a3') are arranged in the toothed region (Z) of the winding carrier (r2).

4. A cooling system as claimed in Claim 3, characterised in that the radial filling channels (a1...a5) are arranged in an axial alignment (p), preferably in the pole region, so as to be distributed over the axial length (1w) of the winding carrier (r2), and there is provided for their connection to the distributor channel network (K) an expanded axial channel (k10) of the latter which is connected to the remaining axial distributor channels (k1) of the distributor channel network by tangential distributor channels (k2).

5. A cooling system as claimed in Claim 3, characterised in that the radial filling channels (a1'...a3') are arranged in an axis-normal alignment plane (no), preferably in the body centre (S), to be distributed across the periphery of the winding carrier (r2), and for their connection to the distributor channel network (KO) peripheral channel pieces (k2') are provided which open into the axial distributor channels (k1) of the distributor channel network.

6. A cooling system as claimed in one of Claims 1 to 5, characterised in that radial pipes for the return channels (k31) open into the space (m2) of the concentric inner vapour column (He2) to protrude through the centrifuged liquid ring (m1) of the mixing chamber (M).

## Revendications

1. Système de refroidissement pour des rotors de machines électriques, notamment pour des rotors de turbogénérateurs, comportant un enroulement d'excitation supraconducteur, constitué par un tambour rotorique comportant au moins un corps rotorique extérieur (r1) ayant sensiblement la forme d'un cylindre creux avec un écran de protection frigorifique tournant conjointement, un corps rotorique intérieur creux servant de support d'enroulement (r2) et fixé de façon isolée du point de vue thermique et dont les points de fixation (points d'articulation) sur le corps rotorique extérieur (r1) sont refroidis, ainsi qu'une chambre de mélange (M), disposée sur la périphérie intérieure du corps rotorique intérieur (r2) et tournant conjointement et qui contient un mélange de phases d'un agent de refroidissement amené de l'extérieur, notamment un mélange de phases d'hélium (He1, He2), qui lors de la rotation du rotor se met sous la forme d'un anneau de liquide extérieur (He1) projeté sous l'effet de la force centrifuge et d'une colonne de vapeur intérieure concentrique (He2), un prélèvement d'un premier courant de l'agent de refroidissement (He10) avec l'agent de refroidissement liquide pour le refroidissement de l'enroulement d'excitation (W) et un prélèvement d'un second courant d'agent de refroidissement (He20) avec de l'agent de refroidissement au moins partiellement vaporisé pour le refroidissement d'une fixation tubulaire du support d'enroulement sur au moins une extrémité axiale du support d'enroulement (r2) étant prévus à partir de la chambre de mélange (M), et dans lequel il se produit un renvoi du premier courant d'agent de refroidissement (He10) dirigé à travers l'enroulement excitation (W), dans la chambre de mélange (M) et un renvoi du second courant d'agent de refroidissement (He20) vers l'extérieur de la machine et dans lequel en outre le support d'enroulement (r2) et l'enroulement d'excitation (W) sont traversés par un réseau de canaux d'agent de refroidissement (K) axiaux, tangentiels et radiaux, auquel cas, à cet effet, des canaux de refroidissement radiaux (k32), s'étendant le long de surfaces latérales de la bobine des paquets de conducteurs d'enroulement (w2), communiquent avec un réseau de canaux distributeurs (KO), qui est disposé, sur le pourtour extérieur (wo), à l'extérieur de la base de la bobine (w1), extérieure du point de vue radial, de l'enroulement d'excitation (W) et qui est constituée par des canaux distributeurs (k1, k2) axiaux et tangentiels, les canaux (k32) étant reliés, par l'intermédiaire de canaux de fonds de rainures (k13) et de canaux d'alimentation en retour (k31), à l'espace de liquide (m1) de la chambre de mélange (M), caractérisé par le fait que

a) le réseau de canaux distributeurs (KO) est relié, à l'extérieur de la zone axiale (1$_w$) de l'enroulement d'excitation sur le côté entraîné (AS) et sur le côté non entraîné (NS), au moyen de canaux d'alimentation radiaux (k30), chargés en cours de fonctionnement par un écoulement, dirigé radialement vers l'extérieur, de l'agent de refroidissement liquide, à l'espace de liquide (m1) de la chambre de mélange (M),

b) que les canaux de refroidissement radiaux (k32) de l'enroulement d'excitation (W) débouchent, par l'intermédiaire des canaux d'alimentation en retour (k31), dans la chambre de mélange (M) en des endroits (A) qui se trouvent au maximum sur le même diamètre et de préférence sur un diamètre plus faible (DA) que les endroits (E), d'entrée dans la chambre de mélange, des canaux d'alimentation (k30),

c) que les canaux d'alimentation radiaux (k30) du réseau de canaux distributeurs (KO) sont isolés thermiquement sur leur longueur pour la protection de parties du corps de rotor adjacentes relativement plus chaudes et que les canaux d'alimentation en retour radiaux (k31) sont isolés thermiquement sur leur longueur pour la protection de parties du corps de rotor adjacentes relativement plus froides, et se présentent notamment sous la forme de tubes à vide poussé à double enveloppe (12, 12.1),

d) de sorte que les canaux de refroidissement radiaux (k32) sont reliés d'une part au réseau de canaux distributeurs (KO) et d'autre part par l'intermédiaire de canaux de fonds de rainures (k13) et de canaux d'alimentation en retour (k31) à la chambre de mélange (M), tandis que ces derniers canaux sont reliés à nouveau aux canaux d'alimentation radiaux (k30) en passant par des boucles de refroidissement par thermosyphon continues (S1a, S1b) et que ces boucles de refroidissement par thermosyphon sont entraînées par les colonnes de liquide présentes dans les canaux d'alimentation radiaux (k30), lesquelles colonnes de liquide sont de façon spécifique plus lourdes étant donné qu'elles sont plus froides que les colonnes de liquides présentes dans les autres canaux de refroidissement radiaux des boucles de refroidissement par thermosyphon (S1a, S1b).

2. Système de refroidissement suivant la revendication 1, caractérisé par le fait que pour le remplissage ou pour compléter le remplissage des canaux de l'agent de refroidissement (K) et de la chambre de mélange (M) avec l'agent de refroidissement, il est prévu des canaux de remplissage radiaux (a1, a2...a5, a1'...a3'), qui partent d'un tube de remplissage coaxial (5) se trouvant à l'intérieur de la chambre de mélange (M) et tournant conjointement, qui est raccordé à un raccord pour l'hélium, et arrivent au réseau (KO) de canaux distributeurs.

3. Système de refroidissement suivant la revendication 2, caractérisé par le fait que les canaux de remplissage radiaux (a1...a5, a1'...a3') sont disposés dans la région dentée (Z) du support d'enroulement (r2).

4. Système de refroidissement suivant la revendication 3, caractérisé par le fait que les canaux de remplissage radiaux (a1...a5) sont répartis sur la longueur axiale (1$_w$) du support d'enroulement (r2) suivant un alignement axial (p), de préférence dans la région des pôles et que, pour leur raccord au réseau (KO) de canaux distributeurs, il est prévu un canal axial plus large (k10) de ce réseau, qui communique avec les autres canaux distributeurs axiaux (k1) du réseau de canaux distributeurs par l'intermédiaire de canaux distributeurs tangentiels (k2).

5. Système de refroidissement suivant la revendication 3, caractérisé par le fait que les canaux de remplissage radiaux (a1'...a3') sont répartis sur la périphérie du support d'enroulement (r2) dans un plan (no) d'alignement normal à l'axe, de préférence au milieu (S) du corps, et que pour leur raccordement au réseau (KO) des canaux distributeurs, il est prévu des sections de canal périphériques (k2'), qui débouchent dans les canaux distributeurs axiaux (k1) du réseau de canaux distributeurs.

6. Système de refroidissement suivant l'une des revendications 1 à 5, caractérisé par le fait que des tubes radiaux pour les canaux d'alimentation en retour (k31) débouchent dans l'espace (m2) de la colonne de vapeur intérieure concentrique (He2) en traversant l'anneau de liquide projeté (m1) de la chambre de mélange (M).

FIG 1A | FIG 1B   FIG 1

FIG 2

FIG 1A

FIG 1B

FIG 3

FIG 4

FIG 6

FIG 5

FIG 7

0 012 318

FIG 8